# FASCICULE DE BREVET EUROPEEN

(11) **EP 2 591 394 B1**
(45) Date de publication et mention de la délivrance du brevet: **30.08.2017**
(21) Numéro de dépôt: 11730031.9
(22) Date de dépôt: 08.07.2011
(51) Int. Cl.: G02C 5/14, G02C 5/22

(54) **MONTURE DE LUNETTES A CHARNIERES TELESCOPIQUES A RESSORT DEPORTE**
BRILLENFASSUNG MIT TELESKOPISCHEN SCHARNIEREN UND VERSETZTER FEDER
SPECTACLES FRAME WITH TELESCOPIC HINGES AND OFFSET SPRING

(30) Priorité: 09.07.2010 FR 1002908
(43) Date de publication de la demande: 15.05.2013
(73) Titulaire: Chêne, Richard, 92200 Neuilly (FR); Miklitarian, Alain, 75014 Paris (FR); Delamour, Dominique, 78490 Les Mesnuls (FR)
(72) Inventeur: Chêne, Richard, 92200 Neuilly (FR); Miklitarian, Alain, 75014 Paris (FR); Delamour, Dominique, 78490 Les Mesnuls (FR)
(74) Mandataire: Office Kirkpatrick
(86) Numéro de dépôt international: PCT/EP2011/061701
(87) Numéro de publication internationale: WO 2012/004405

(56) Documents cités:
- WO-A1-98/33087
- DE-A1- 10 247 604
- FR-A1- 2 517 080
- US-B1- 6 381 807

## Description

Le domaine de l'invention est celui des montures de lunettes.

Une monture de lunettes comporte une face avant et deux branches montées articulées chacune sur un tenon latéral de la face avant par l'intermédiaire d'une charnière.

En position d'ouverture, une branche de lunettes s'étend sensiblement à angle droit du plan général de la face avant.

Une charnière télescopique permet d'ouvrir la branche au-delà de cet angle droit. Elle assure grâce à cette « sur-ouverture » un plus grand confort quand la monture est chaussée sur le nez et elle évite le risque de casser ou déformer la monture et les branches.

Une charnière télescopique de monture de lunettes comporte généralement un ressort qui plaque la branche contre la tête mais autorise précisément la sur-ouverture.

Une charnière télescopique comporte généralement deux éléments assemblés sur un axe d'articulation et solidaires respectivement d'un tenon de face avant (élément de face) et d'une branche (élément de branche), plus particulièrement de la soie de la branche qui est l'âme sur laquelle elle est formée, quand cette âme ne forme pas la branche à elle seule. Il se peut également que la charnière soit fixée directement à la branche, même quand elle est pourvue d'une soie, la fixation s'opérant sur l'extrémité de la branche qu'on appelle également tenon de branche.

L'élément de branche solidaire de la branche comporte une coulisse montée, d'une part, sur l'axe d'articulation et, d'autre part, dans un fourreau solidaire de l'âme ou de la branche elle-même. Le coulissement de la coulisse dans le fourreau s'effectue contre et sous l'action d'un ressort, généralement de compression, s'étendant également dans le fourreau.

Dans les montures du type rappelé ci-dessus, les charnières de branche, du fait de la présence du ressort, sont donc assez volumineuses et lourdes. De surcroît, et toujours de ce fait, les branches, au niveau des charnières, sont assez épaisses. Tout cela contribue à alourdir les montures dans la région de la face avant, ce qui n'est pas un gage de confort, notamment pour le nez des utilisateurs qui devient marqué par le pont qui réunit les deux parties de face avant supportant les verres.

C'est cette difficulté que les demandeurs ont cherché à résoudre en proposant leur invention.

Elle concerne, à cet effet, une monture de lunettes selon la revendication 1.

Grâce à l'invention, et le ressort de charnière étant déporté dans l'extrémité libre de la branche, on a transféré une partie de la masse qui se trouvait à l'avant, dans la charnière, à l'arrière, dans l'extrémité de la branche, ce qui allège le nez de l'utilisateur et améliore le confort.

En outre, si, comme dans la forme de réalisation préférée, l'extrémité de branche est ouverte et obturée par le manchon qui est amovible, le ressort se trouvant dans cette extrémité, il est facilement accessible pour être remplacé par un autre, éventuellement de forme différente.

On peut noter que FR 2517080 présente une monture de lunettes très semblable à celle du préambule de la revendication 1, mais, du fait que le ressort de cette monture ne s'étend pas dans la portion de fourreau de l'extrémité libre de la branche, le problème du poids de la monture dans la région de la face avant n'est pas résolu. Quant à US 6381807, il enseigne aussi une monture de lunettes avec des ressorts de branche qui ne s'étendent pas non plus dans les extrémités libres des branches.

Avantageusement l'extrémité de la coulisse de la monture de l'invention est filetée et le manchon est taraudé et vissé sur la coulisse.

L'invention sera mieux comprise à l'aide de la description suivante d'une forme de réalisation préférée de la monture de l'invention, en référence au dessin en annexe, sur lequel
- la figure 1 est une vue en perspective de dessus d'une monture de lunettes classique ;

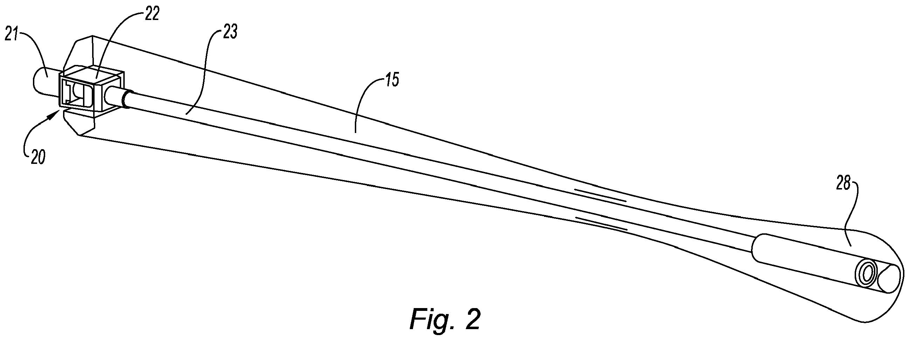

- les figure 2 est une vue en transparence d'une branche de la monture de l'invention ;

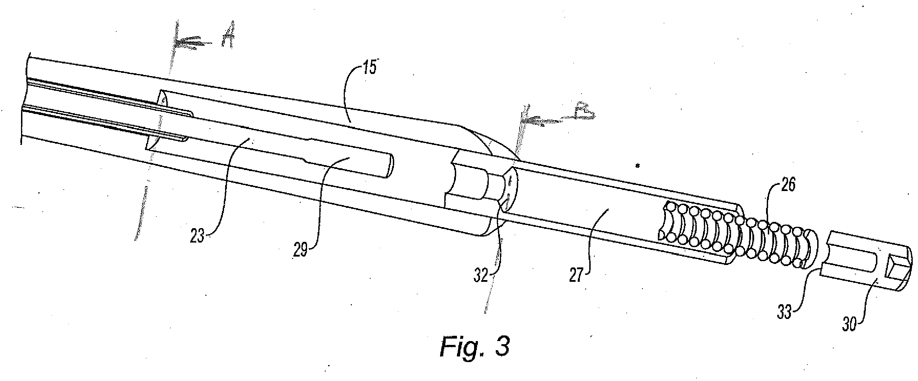

- la figure 3 est une vue éclatée de l'extrémité de la branche de la figure 2 et

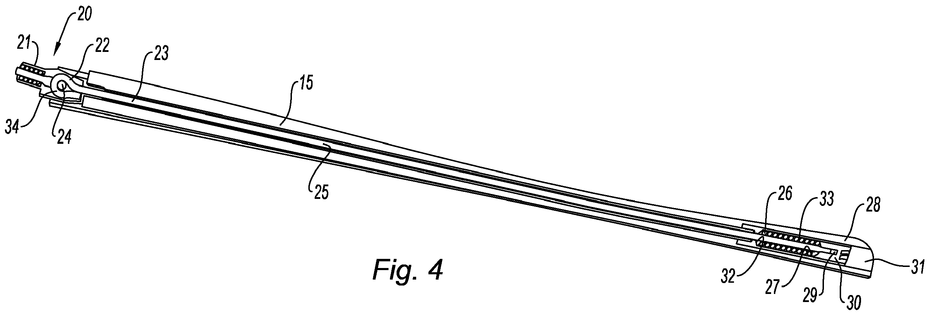

- la figure 4 est une vue en coupe de la branche de la figure 2.

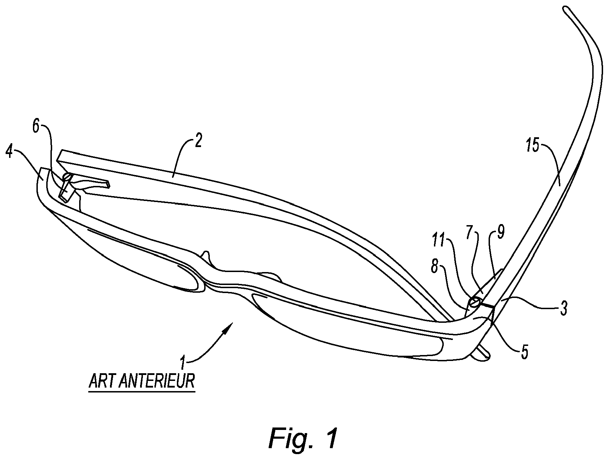

Une monture de lunettes classique de l'art antérieur comporte, en référence à la figure 1, une face avant 1 destinée à recevoir des verres généralement optiques, et une branche droite 2 et une branche gauche 3, dans l'exemple représenté, celle-ci 2 rabattue contre l'arrière de la face avant 1 en position de fermeture et celle-là 3, en position d'ouverture sensiblement perpendiculaire au plan général de la face avant 1. La face avant 1 se prolonge latéralement, sensiblement à angle droit, par deux tenons latéraux de face avant 4, 5 sur lesquels sont articulés les branches 2, 3 par l'intermédiaire de deux charnières 6, 7, ici, des charnières dites télescopiques.

Une charnière télescopique - soit par exemple la charnière gauche 7 - comporte un élément de face avant 8, solidaire du tenon de face avant 5, et un élément de branche 9, solidaire de la branche 3 et, plus précisément ici, de l'âme 15 de cette branche sur laquelle elle est formée. Les deux éléments de charnière sont articulés sur un axe d'articulation 11 solidaire de l'élément de face avant 8.

Les charnières 6, 7 des deux branches 2, 3 sont identiques.

Cela exposé, on va maintenant aborder les branches de la monture de l'invention, par ailleurs classique.

Les deux branches sont toujours identiques.

Une branche 15 est articulée, à une extrémité, sur un tenon latéral de la face avant par l'intermédiaire d'une charnière 20 dite encore télescopique comportant un élément de face avant 21, solidaire du tenon, et un élément de branche 22 solidaire de la branche 15 comportant une coulisse 23 articulée sur l'élément de face avant 21, autour d'un axe d'articulation 24, et montée coulissante dans un fourreau 25 ménagé dans la branche 15 qui est donc tubulaire.

La coulisse se déplace dans le fourreau 25 contre et sous l'action d'un ressort 26 disposé à l'autre extrémité 28 de la branche, dite extrémité libre, dans une portion élargie 27 du fourreau 25.

L'extrémité 29 de la coulisse 23 est filetée et vissée dans un manchon taraudé 30 obturant le fourreau 25, 27 qui s'étend jusqu'au bord de l'extrémité de branche 28 obturée par un bouchon enjoliveur 31.

De façon générale, on peut dire que l'extrémité de branche 28 est ouverte et qu'elle est obturée par le manchon 30. Ce manchon 30 est amovible et permet donc de placer un ressort 26 approprié et adapté à l'usage projeté en fonction de sa force. Accessible, le ressort 26 peut être remplacé. Le ressort 26, qui est un ressort de compression, est donc logé dans la partie élargie 27 du fourreau 25 en appui par ses deux extrémités sur le fond 32 de cette partie élargie, d'une part, et sur la face d'extrémité 33, tournée vers l'intérieur, du manchon 30.

Lors du pivotement de fermeture de la branche ou de sur-ouverture, la coulisse 23 est entraînée dans le fourreau 25 dans la direction de l'extrémité libre 28 de la branche vers la charnière 20. La coulisse 23, dans son déplacement, entraîne avec elle le manchon 30 qui comprime le ressort 26.

A l'état de repos, branche fermée ou ouverte, le ressort 26 est détendu, après coulissement de la coulisse 23 dans l'autre direction sous l'action du ressort 26.

On remarquera que l'extrémité 34 du coulisseau 23 disposée dans la charnière est en forme de crochet, ou d'oeillet, pour pouvoir tourner autour de l'axe d'articulation 24.

## Revendications

1. Monture de lunettes comportant une face avant (1) prolongée par deux tenons latéraux (4, 5) et deux branches (2,15) articulées sur les tenons autour d'axes d'articulation (11) de deux charnières télescopiques (20), chacune, avec un élément de face avant (21) solidaire d'un tenon et un élément de branche (22), solidaire d'une branche (15), l'élément de branche (22) d'une charnière comportant une coulisse (23) articulée sur l'élément de face avant (21) et montée coulissante dans un fourreau (25) contre et sous l'action d'un ressort (26), monture **caractérisée par le fait que** la coulisse (23) d'une charnière de branche (20) s'étend jusqu'à l'extrémité libre (28) de la branche (15) de forme tubulaire et ménageant ledit fourreau (25 ; 27), qui s'étend jusqu'à l'extrémité de la coulisse (23), un manchon (30), fixé à l'extrémité (29) de la coulisse (23), étant monté coulissant dans l'extrémité libre (28) de la branche qui comporte une portion de fourreau élargie (27) dans laquelle s'étend le ressort (26) et qui présente un fond (32) sur lequel le ressort (26) prend appui pour coopérer avec le manchon (30).

2. Monture selon la revendication 1, dans laquelle l'extrémité de branche (28) est ouverte et obturée par le manchon (30) qui est amovible, le ressort (26) se trouvant dans cette extrémité (28),

3. Monture selon la revendication 2, dans laquelle l'extrémité (29) de la coulisse (23) est filetée et le manchon (30) est taraudé et vissé sur la coulisse (23).

## Patentansprüche

1. Brillengestell, umfassend eine Vorderseite (1), die durch zwei seitliche Backen (4, 5) und zwei Bügel (2, 15) verlängert ist, die an den Backen um Gelenkachsen (11) von zwei teleskopischen Scharnieren (20) herum mit jeweils einem vorderseitigen Element (21), das mit einer Backe fest verbunden ist, und einem Bügelelement (22), das mit einem Bügel (15) fest verbunden ist, angelenkt sind, wobei das Bügelelement (22) eines Scharniers ein Gleitstück (23) aufweist, das an dem vorderseitigen Element (21) angelenkt ist und in einer Hülse (25) gegen die und unter der Einwirkung einer Feder (26) gleitend montiert ist, wobei das Gestell **dadurch gekennzeichnet ist, dass** sich das Gleitstück (23) eines Bügelscharniers (20) bis zum freien Ende (28) des röhrenförmigen Bügels (15) erstreckt und die Hülse (25; 27) ausbildet, die sich bis zum Ende des Gleitstücks (23) erstreckt, wobei eine Muffe (30), die an dem Ende (29) des Gleitstücks (23) befestigt ist, in dem freien Ende (28) des Bügels gleitend montiert ist, der einen erweiterten Hülsenteil (27) umfasst, in dem sich die Feder (26) erstreckt und der einen Boden (32) aufweist, auf dem sich die Feder (26) abstützt, um mit der Muffe (30) zusammenzuwirken.

2. Gestell nach Anspruch 1, wobei das Bügelende (28) offen ist und durch die Muffe (30) verschlossen ist, die abnehmbar ist, wobei sich die Feder (26) in diesem Ende (28) befindet.

3. Gestell nach Anspruch 2, wobei das Ende (29) des Gleitstücks (23) mit einem Außengewinde versehen ist und die Hülse (30) mit einem Innengewinde versehen ist und auf das Gleitstück (23) geschraubt ist.

## Claims

1. Spectacle frame comprising:
a front face (1) extended by two lateral tenons (4,5) and two sides (2,15) articulated to the tenons about articulation axes (11) of two telescopic hinges (20), each, with a front face element (21) fast with a tenon and a side element (22) fast with a side (15), the side element (22) of an hinge including a slide (23) articulated to the front face element (21) and slidably mounted in a sheath (25) against and under the action of a spring (26), frame **characterized in that** the slide (23) of a side hinge (20) extends as far as the free end (28) of the side (15) of a tubular shape and providing said sheath (25;27), which extends up to the end of the slide (23), a sleeve (30), fixed to the end (29) of the slide (23), being slidably mounted in the free end (28) of the side which comprises an enlarged sheath portion (27) in which the spring (26) extends and which presents a bottom (32) onto which the spring (26) abuts to cooperate with the sleeve (30).

2. Frame as claimed in claim 1, wherein the side end (28) is open and closed by the sleeve (30) which is removable, the spring (26) being in said end (28).

3. Frame as claimed in claim 2, wherein the end (29) of the slide (23) is externally threaded and the sleeve (30) is internally threaded and screwed to the slide (23).
